# EUROPEAN PATENT APPLICATION

(11) **EP 4 318 715 A1**
(43) Date of publication of application: **07.02.2024**
(21) Application number: 22937662.9
(22) Date of filing: 07.05.2022
(51) Int. Cl.: H01M 10/0567, H01M 10/0569

(54) **SECONDARY BATTERY CONTAINING SILICATE ESTER AND ELECTRICAL DEVICE**

(71) Applicant: Contemporary Amperex Technology Co., Limited, Ningde City, Fujian 352100 (CN)
(72) Inventor: XU, Ningbo, Ningde, Fujian 352100 (CN); ZOU, Hailin, Ningde, Fujian 352100 (CN); CHEN, Peipei, Ningde, Fujian 352100 (CN)
(74) Representative: Gong, Jinping
(86) International application number: PCT/CN2022/091463
(87) International publication number: WO 2023/216027

(57) **Abstract**

This application relates to a secondary battery including a silicate ester and/or a derivative thereof, where the silicate ester and/or the derivative thereof includes a 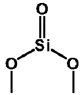 structure in a cyclic or non-cyclic structure or a 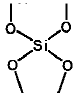 structure in a cyclic structure. This application further relates to a battery pack including the secondary battery and an electric apparatus including the secondary battery or the battery pack.

## Description

### TECHNICAL FIELD

This application relates to a secondary battery containing a silicate ester with a specified structure and/or a derivative thereof, and a battery pack and an electric apparatus containing such secondary battery.

### BACKGROUND

Featured by low cost, long service life, high safety, and the like, secondary batteries have become the most popular energy storage system and are now widely used in fields such as battery electric vehicles, hybrid electric vehicles, and smart power grids. In construction of secondary battery systems, ternary positive electrode materials (LiNiₓCo_{y}M_{z}O₂, 1 ≥ x ≥ 0, 1 ≥ y ≥ 0, x + y < 1, M = Mn, Al) have advantages such as high operating voltage, large capacity, low cost, and low toxicity, making them a preferred choice for positive electrodes of lithium-ion secondary batteries. In addition, increasing the amount of nickel in ternary materials can further enhance the energy storage capability of lithium-ion batteries. However, high-nickel materials (LiNiₓCo_{y}M_{z}O₂, x ≥ 0.6) undergo structural changes and generate microcracks at high operating voltages. As the nickel content increases, the oxidizability of the surfaces of the positive electrode materials significantly increases, leading to reduced interface stability. The interface instability further causes rapid decay of reversible capacity and increase in impedance of the battery. Furthermore, due to the presence of HF acid in a LiPF₆-based electrolyte, the high-nickel positive electrode material is attacked during cycling, resulting in dissolution of transition metal ions and structural damage to the positive electrode material. The dissolved transition metal ions migrate and deposit on the surface of negative electrodes, affecting SEI films of the negative electrodes. Catalytic reactions at active sites of the positive electrodes, irreversible phase transitions in structure of the positive electrode material, and dissolution of transition metal ions are all critical factors affecting battery performance.

Therefore, currently, there is still a need for a secondary battery that has improved interface stability to achieve more desirable battery kinetic performance.

### SUMMARY

This application is carried out in view of the above issue and aims to provide a secondary battery to address the technical problem of insufficient interface stability and further improve kinetic performance of batteries.

To achieve the above objective, a first aspect of this application provides a secondary battery including a silicate ester and/or a derivative thereof, where the silicate ester and/or the derivative thereof includes a 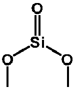 structure in a cyclic or non-cyclic structure or includes a 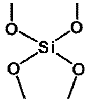 structure in a cyclic structure.

In this application, the silicate ester and/or the derivative thereof may be contained in the electrolyte of the secondary battery and may be used as a solvent, co-solvent, and/or additive in the electrolyte. In any embodiment, a proportion of the silicate ester and/or the derivative thereof in the electrolyte is 0.001wt% to 90wt%. The proportion of the silicate ester and/or the derivative thereof in the electrolyte can be further adjusted in a wide range according to the specific usage, thus achieving different degrees of performance regulation of the secondary battery.

In any embodiment, the silicate ester and/or the derivative thereof may have a cyclic or non-cyclic structure. By including the above silicate ester and/or the derivative thereof in the electrolyte, the secondary battery of this application can exhibit significantly improved interface stability, thereby enabling the secondary battery to maintain satisfactory cycling stability and capacity retention rate after multiple charge and discharge cycles.

In any embodiment, when the silicate ester and/or the derivative thereof is of a cyclic structure, the ring is a 3- to 6-membered ring. Through selection of a silicate ester having a cyclic structure with a specific number of ring members and/or a derivative thereof, the interface stability of the secondary battery of this application can be further improved.

In any embodiment, the silicate ester has structures shown in formula 1 to formula 15: 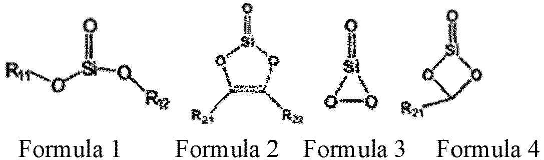 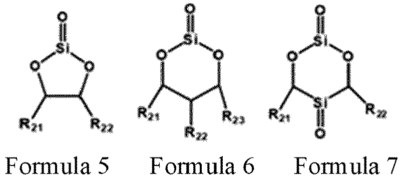 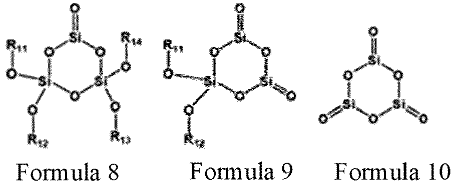 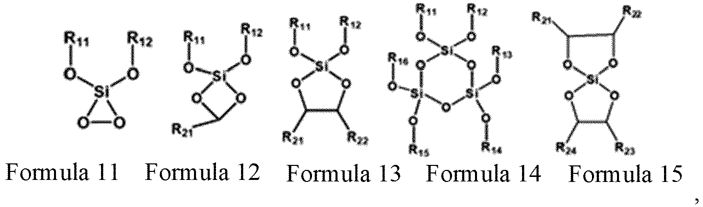
where R₁₁ to R₁₆ and R₂₁ to R₂₄ are each independently selected from H, halogen, substituted or unsubstituted C₁-C₁₀ alkyl group, substituted or unsubstituted C₂-C₁₀ alkenyl group, substituted or unsubstituted C₂-C₁₀ alkynyl group, substituted or unsubstituted C₆-C₁₄ aryl group, carbonyl group, carboxyl group, ester group, nitrile group, and ether group, where in a case of substitution, the substituent group is selected from halogen, or
two groups of R₁₁ to R₁₆ and R₂₁ to R₂₄ form a 4- to 6-membered heterocyclic ring together with groups to which the two groups are attached,
or the silicate ester derivative is derived from a silicate ester having the structures shown in formula 1 to formula 15. Through selection of a silicate ester and/or a derivative thereof having a specific chemical structure as defined above, a secondary battery with significantly improved cycling stability can be obtained.

In any embodiment, the silicate ester has a structure selected from one or more of formula 1, formula 2, formula 5, formula 13, and formula 15. In any embodiment, R₁₁ to R₁₆ and R₂₁ to R₂₄ are each independently selected from H and C₁-C₆ alkyl group. In a further embodiment, the silicate ester has the structure of formula 1, where R₁₁ is methyl group and R₁₂ is ethyl group; or the silicate ester has the structure of formula 2, where R₂₁ and R₂₂ are both H; or the silicate ester has the structure of formula 5, where R₂₁ and R₂₂ are both H; or the silicate ester has the structure of formula 13, where R₁₁, R₁₂, R₂₁ and R₂₂ are all H; or the silicate ester has the structure of formula 15, where R₂₁ to R₂₄ are all H. Through further selection of the chemical structure of the silicate ester and the type of the substituent group therein, the stabilizing effect of the silicate ester can be further adjusted so as to control the cycling performance of the secondary battery.

In any embodiment, the positive electrode active material of the secondary battery is selected from one or more of lithium iron phosphate, lithium manganese iron phosphate, lithium cobalt oxide, lithium nickel oxide, lithium manganese oxide, lithium nickel manganese oxide, lithium nickel cobalt manganese oxide, lithium nickel cobalt aluminum oxide, lithium-rich material, sodium-oxide compound, potassium-oxide compound, and compounds obtained by adding other transition metals or non-transition metals to the foregoing compounds.

In any embodiment, a negative electrode active material of the secondary battery is selected from one or more of graphite, soft carbon, hard carbon, meso-carbon microbeads, carbon fiber, carbon nanotubes, elemental silicon, silicon-oxygen compound, silicon-carbon composite, lithium titanate, lithium metal, sodium metal, potassium metal, and compounds obtained by adding other transition metals or non-transition metals to the foregoing materials.

In any embodiment, the secondary battery further includes an organic solvent selected from one or more of linear carbonate, cyclic carbonate, carboxylic acid ester, and ether. The organic solvent includes one or more of diethyl carbonate, dipropyl carbonate, ethyl methyl carbonate, methyl propyl carbonate, ethyl propyl carbonate, ethylene carbonate, 1,2-propanediolcarbonate, butylene carbonate, gamma-butyrolactone, methyl formate, ethyl acetate, propyl acetate, methyl propionate, ethyl propionate, tetrahydrofuran, dimethyl ether, diethyl ether, and ethylene glycol dimethyl ether.

In any embodiment, the secondary battery further includes an electrolyte additive selected from one or more of unsaturated bond-containing cyclic carbonate compound, halogen-substituted cyclic carbonate compound, sulfate compound, sulfite compound, sultone compound, disulfonic acid compound, nitrile compound, aromatic compound, isocyanate compound, phosphonitrile compound, cyclic anhydride compound, phosphite compound, phosphate compound, borate compound, and carboxylate compound.

In any embodiment, the secondary battery further includes an electrolytic salt selected from one or more of LiPF₆, LiBF₄, LiBOB, LiAsF₆, Li(FSOz)zN, LiCF₃SO₃, and LiClO₄.

In any embodiment, the secondary battery includes a lithium silicate having a gel-like structure. The gel-like structure of the lithium silicate can cover the interface of the positive electrode active material, further enhancing the interface stability of the positive electrode active material.

A second aspect of this application provides a battery pack including the secondary battery selected from the first aspect of this application.

A third aspect of this application provides an electric apparatus including the secondary battery selected from the first aspect of this application or the battery pack selected from the second aspect of this application.

### BRIEF DESCRIPTION OF DRAWINGS

To describe the technical solutions in the embodiments of this application more clearly, the following briefly describes the accompanying drawings required for describing embodiments of this application. Apparently, the accompanying drawings in the following description show only some embodiments of this application, and persons of ordinary skill in the art may still derive other drawings from these accompanying drawings without creative efforts.
FIG. 1 is a schematic diagram of a lithium-ion secondary battery according to an embodiment of this application.
FIG. 2 is an exploded view of the lithium-ion secondary battery according to an embodiment of this application in FIG. 1.
FIG. 3 is a schematic diagram of a battery pack according to an embodiment of this application.
FIG. 4 is an exploded view of a battery pack according to an embodiment of this application in FIG. 3.
FIG. 5 is a schematic diagram of an apparatus using a battery pack as a power source according to an embodiment of this application.

### Description of reference signs

1. battery pack;
2. upper box body;
3. lower box body;
4. battery module;
5. lithium-ion secondary battery
51. housing;
52. electrode assembly; and
53. cover plate.

### DESCRIPTION OF EMBODIMENTS

For brevity, this application specifically discloses some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

Current secondary batteries, especially those using ternary high-nickel positive electrode materials, generally suffer from insufficient interface stability. The high amount of nickel ions in high-nickel positive electrodes catalyzes the oxidation reaction of the electrolyte, leading to the formation of thick interface components and severe gas generation issues, thereby increasing the safety hazards of the battery cells.

For the deterioration of battery performance caused by the interface structure instability of ternary batteries, the common solutions focus on improving the interface stability. Stable interface components play an important role in adapting to the catalysis of transition metal ions and inhibiting excessive consumption of the electrolyte. At present, the modification of the interface is still achieved through non-in-situ or in-situ methods, where a layer of interface component is applied onto the interface of the positive electrode material. Such interface components are mostly organic polymers, organic oligomers, small organic molecules, or inorganic oxides, carbonates, sulfates, borates, phosphates, and the like. However, this solution still fails to effectively protect interface stability of a positive electrode of ternary materials, especially a high-nickel positive electrode. The possible reason is that the interface structure generated by non-in situ coating cannot achieve uniform coating and stable existence during charge and discharge processes. The method of using electrolyte additives to achieve in-situ generation of interface components usually results in crystalline structured oxides or salts in the inorganic component of the inner interface layer. This inorganic inner layer is prone to fracture during the volume changes associated with lithium deintercalation/intercalation, leading to direct contact between active components and electrolyte, causing excessive consumption of electrolyte and active lithium, and thereby deteriorating battery cell performance.

Therefore, there is a need in the art to provide an electrolyte solvent, co-solvent, or additive that improves the stability of interface components and suppresses excessive decomposition of electrolyte components, as well as to provide a long-lifespan secondary battery using such electrolyte solvent, co-solvent, or additive.

Specifically, a first aspect of this application provides a secondary battery including a silicate ester and/or a derivative thereof, where the silicate ester and/or the derivative thereof includes a 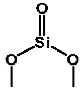 structure in a cyclic or non-cyclic structure or includes a 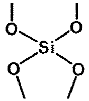 structure in a cyclic structure.

The inventors have found that addition of the above silicate ester with a specific structure to the electrolyte of a secondary battery can effectively solve the foregoing problems in the prior art. Such silicate ester has a structure similar to the structure of the conventional carbonate ester and can undergo decomposition reactions during charge and discharge processes, generating silicates containing main salt cations of the corresponding electrolyte, such as Li₄SiO₄, Li₂SiO₃, and Li₂SiO₅; and/or Na₄SiO₄, Na₂SiO₃, and Na₂SiO₅. A silicate ester containing 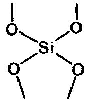 in the cyclic structure undergoes ring opening reactions during charge and discharge processes, generating structures similar to 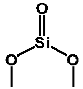 or generating corresponding silicates, such as lithium silicate. Lithium silicate is a series of compounds generated when lithium metal reacts with silicic acid. Commercially known as lithium water glass, lithium silicate is an odorless, tasteless, and transparent liquid with weak alkalinity and a pH value of around 11. The relative density and viscosity of the product vary with the composition of the product. The product has a relative density ranging from 1.16 to 1.19 (at 25°C), and is soluble in water and alkaline solutions and insoluble in alcohols and organic solvents. It forms gel when reacted with acids, and has self-drying properties. After the water in the solution evaporates, a dry film insoluble in water can be generated, exhibiting water irreversibility. Lithium silicate can be used in glass systems, molten salt systems, and high-temperature ceramic glazes, and can also be used as an anti-rust coating for surfaces of steel and the like. Without being confined to any particular theory, the inventors believe that the silicon salts (such as lithium silicate) generated by the silicate ester disclosed in this application have a certain alkalinity, which can remove the acidic substances in the electrolyte and inhibit the damage to the interface structure caused by HF and the like. In addition, the products generated by the reaction between lithium silicate and acid exhibit a gel-like structure, which also has a certain stability. Furthermore, due to its inherent viscosity, silicate ester can cover the interface of the positive electrode active material like glue, thereby enhancing the stability of carbonate esters or other additive decomposition products at the interface. The silicate ester derivatives may include but are not limited to salts formed by the silicate ester with alkali metals or alkaline earth metals.

In this application, the silicate ester and/or the derivative thereof may be contained in the electrolyte of the secondary battery. In some embodiments, a proportion of the silicate ester and/or the derivative thereof in the electrolyte is 0.001wt% to 90wt%. The silicate ester may be used as a solvent, co-solvent, and/or additive in the electrolyte. When the silicate ester is used as a solvent in the electrolyte, its proportion may be 20wt% to 90wt%. When the silicate ester is used as a co-solvent in the electrolyte, its proportion may be 5wt% to 30wt%. Furthermore, when the silicate ester is used as an additive in the electrolyte, its proportion may be 0.01wt% to 10wt%, all based on the total weight of the electrolyte. Additionally, the silicate ester and/or the derivative thereof may also be present on the surface of the positive electrode active material, the surface of the negative electrode active material, and both sides of the separator of the secondary battery.

In some embodiments, the silicate ester and/or the derivative thereof may have a cyclic or non-cyclic structure. When it does not have a cyclic structure (that is, it is of a linear structure), it has a 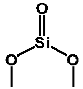 structure; when it has a cyclic structure, the cyclic structure contains a 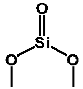 structure or a 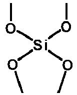 structure. It should be noted that the other side of the single bond attached to oxygen in the structure is a bonding site where oxygen is attached to other groups, not meaning a methyl group. By including the above silicate ester and/or the derivative thereof in the electrolyte, the secondary battery of this application can exhibit significantly improved interface stability, thereby enabling the secondary battery to maintain satisfactory cycling stability and capacity retention rate after multiple charge and discharge cycles (for example, 1,000 cycles).

In some embodiments, when the silicate ester and/or the derivative thereof is of a cyclic structure, the ring is a 3- to 6-membered ring. When the cyclic structure has more than 6 members, the stress resulting from the cyclic structure weakens, making it more difficult for ring-opening reactions to take place. This is detrimental to stability enhancement. In particular, the cyclic structure is a 5-membered ring. Through selection of a silicate ester having a cyclic structure with a specific number of ring members and/or a derivative thereof, the stability of the secondary battery of this application can be further improved.

In some embodiments, the silicate ester has structures shown in formula 1 to formula 15: 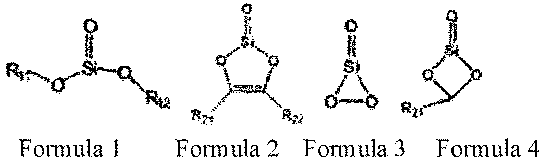 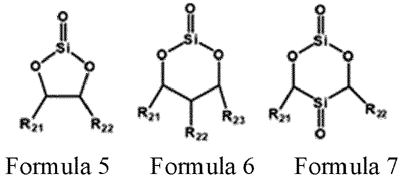 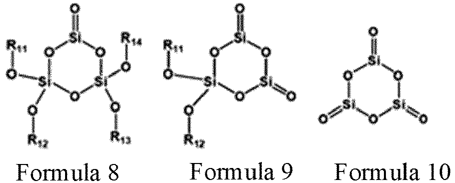 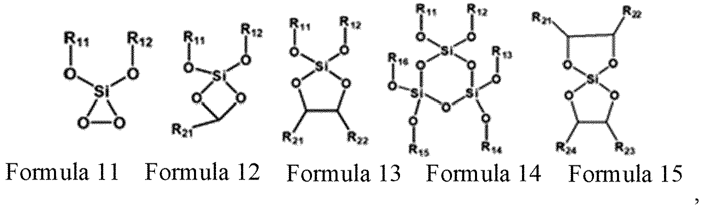
where R₁₁ to R₁₆ and R₂₁ to R₂₄ are each independently selected from H, halogen, substituted or unsubstituted C₁-C₁₀ alkyl group, substituted or unsubstituted C₂-C₁₀ alkenyl group, substituted or unsubstituted C₂-C₁₀ alkynyl group, substituted or unsubstituted C₆-C₁₄ aryl group, carbonyl group, carboxyl group, ester group, nitrile group, and ether group, where in a case of substitution, the substituent group is selected from halogen, or
two groups of R₁₁ to R₁₆ and R₂₁ to R₂₄ form a 4- to 6-membered heterocyclic ring together with groups to which the two groups are attached,
or the silicate ester derivative is derived from a silicate ester having the structures shown in formula 1 to formula 15. The selection of the groups R₁₁ to R₁₆ and R₂₁ to R₂₄ should be chemically reasonable, satisfying valence bond theory and the requirements for the stability of organic compounds, especially cyclic organic compounds.

In some embodiments, R₁₁ to R₁₆ and R₂₁ to R₂₄ are each independently selected from H, halogen, substituted or unsubstituted C₁-C₆ alkyl group, substituted or unsubstituted C₂-C₆ alkenyl group, substituted or unsubstituted C₂-C₆ alkynyl group, substituted or unsubstituted C₆-C₁₀ aryl group, carbonyl group, carboxyl group, ester group, nitrile group, and ether group, where in a case of substitution, the substituent group is selected from halogen.

In a further embodiment, R₁₁ to R₁₆ and R₂₁ to R₂₄ are each independently selected from H, halogen, substituted or unsubstituted C₁-C₆ alkyl group, phenyl group, carboxyl group, ester group, and nitrile group, where in the case of substitution, the substituent group is selected from halogen. Through selection of a silicate ester having a specific chemical structure defined above or a derivative thereof, its reaction activity as well as product stability can be further adjusted to obtain a secondary battery with further improved cycling stability.

In some embodiments, the silicate ester has a structure selected from one or more of formula 1, formula 2, formula 5, formula 13, and formula 15 described above. In some embodiments, R₁₁ to R₁₆ and R₂₁ to R₂₄ are each independently selected from H and C₁-C₆ alkyl group.

In a further embodiment, the silicate ester has the structure of formula 1, where R₁₁ is methyl group and R₁₂ is ethyl group; or
the silicate ester has the structure of formula 2, where R₂₁ and R₂₂ are both H; or
the silicate ester has the structure of formula 5, where R₂₁ and R₂₂ are both H; or
the silicate ester has the structure of formula 13, where R₁₁, R₁₂, R₂₁ and R₂₂ are all H; or
the silicate ester has the structure of formula 15, where R₂₁ to R₂₄ are all H.

Through further selection of the chemical structure of the silicate ester and the type of the substituent group therein, the stabilizing effect of the silicate ester can be further adjusted so as to control the cycling performance of the secondary battery.

In some embodiments, the secondary battery includes a lithium silicate having a gel-like structure. The gel-like structure of the lithium silicate can cover the interface of the positive electrode active material, further enhancing the interface stability of the positive electrode active material.

In some embodiments, the positive electrode active material of the secondary battery is selected from one or more of lithium iron phosphate, lithium manganese iron phosphate, lithium cobalt oxide, lithium nickel oxide, lithium manganese oxide, lithium nickel manganese oxide, lithium nickel cobalt manganese oxide, lithium nickel cobalt aluminum oxide, lithium-rich material, sodium-oxide compound, potassium-oxide compound, and compounds obtained by adding other transition metals or non-transition metals to the foregoing compounds. In any embodiment, a negative electrode active material of the secondary battery is selected from one or more of graphite, soft carbon, hard carbon, meso-carbon microbeads, carbon fiber, carbon nanotubes, elemental silicon, silicon-oxygen compound, silicon-carbon composite, lithium titanate, lithium metal, sodium metal, potassium metal, and compounds obtained by adding other transition metals or non-transition metals to the foregoing materials.

In some embodiments, the secondary battery further includes an organic solvent selected from one or more of linear carbonate, cyclic carbonate, carboxylic acid ester, and ether. The organic solvent includes one or more of diethyl carbonate, dipropyl carbonate, ethyl methyl carbonate, methyl propyl carbonate, ethyl propyl carbonate, ethylene carbonate, 1,2-propanediolcarbonate, butylene carbonate, gamma-butyrolactone, methyl formate, ethyl acetate, propyl acetate, methyl propionate, ethyl propionate, tetrahydrofuran, dimethyl ether, diethyl ether, and ethylene glycol dimethyl ether.

In some embodiments, the secondary battery further includes an electrolyte additive selected from one or more of unsaturated bond-containing cyclic carbonate compound, halogen-substituted cyclic carbonate compound, sulfate compound, sulfite compound, sultone compound, disulfonic acid compound, nitrile compound, aromatic compound, isocyanate compound, phosphonitrile compound, cyclic anhydride compound, phosphite compound, phosphate compound, borate compound, and carboxylate compound.

In some embodiments, the secondary battery further includes an electrolytic salt selected from one or more of LiPF₆, LiBF₄, LiBOB, LiAsF₆, Li(FSOz)zN, LiCF₃SO₃, and LiClO₄.

The materials of the components of the secondary battery of this application can be selected in a wide range. In some embodiments, the secondary battery is particularly a lithium-ion secondary battery. The following provides a detailed description of the battery cell of the lithium-ion secondary battery. It can be understood that the following description of the lithium-ion secondary battery is also applicable to secondary batteries of other systems, such as sodium-ion batteries, except that the positive electrode active materials are different.

Generally, a lithium-ion secondary battery includes a positive electrode plate, a negative electrode plate, a separator, and an electrolyte. In a charge and discharge process of the battery, active ions are intercalated and deintercalated between the positive electrode plate and the negative electrode plate. The separator is disposed between the positive electrode plate and the negative electrode plate to provide separation. The electrolyte conducts ions between the positive electrode plate and the negative electrode plate.

### [Electrolyte]

The electrolyte conducts ions between the positive electrode plate and the negative electrode plate. The electrolyte includes an electrolytic salt and a solvent.

In this application, the electrolytic salt may be an electrolytic salt commonly used in lithium-ion secondary batteries, such as a lithium salt, including a lithium salt that can serve as a high-thermal-stability salt, a lithium salt that can serve as a low-impedance additive, or a lithium salt that inhibits corrosion of aluminum foil, as described above. In an example, the electrolytic salt may be selected from one or more of LiPF₆ (lithium hexafluorophosphate), LiBF₄ (lithium tetrafluoroborate), LiAsF₆ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiPOzFz (lithium difluorophosphate), LiDFOP (lithium difluorodioxalate phosphate), LiSO₃F (lithium fluorosulfonate), NDFOP (difluorodioxalate), Li₂F(SO₂N)₂SO₂F, KFSI, CsFSI, Ba(FSI)₂ and LiFSO₂NSO₂CH₂CH₂CF₃.

The solvent is not particularly limited in type, and may be selected based on actual needs. In some embodiments, the solvent is a non-aqueous solvent. Optionally, the solvent may include one or more of linear carbonate, cyclic carbonate, and carboxylic acid ester. In some embodiments, the solvent may be selected from more than one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetrahydrofuran, tetramethylene sulfone (SF), methyl sulfone (MSM), ethyl methyl sulfone (EMS), and diethyl sulfone (ESE).

In some embodiments, the electrolyte further optionally includes other additives. For example, the additives may include a negative electrode film-forming additive, or may include a positive electrode film-forming additive, or may include an additive that can improve some performance of a battery, for example, an additive for improving over-charge performance of the battery, an additive for improving high-temperature performance of the battery, and an additive for improving low-temperature performance of the battery. In an example, the additive is selected from at least one of unsaturated bond-containing cyclic carbonate compound, halogen-substituted cyclic carbonate compound, sulfate compound, sulfite compound, sultone compound, disulfonic acid compound, nitrile compound, aromatic compound, isocyanate compound, phosphonitrile compound, cyclic anhydride compound, phosphite compound, phosphate compound, borate compound, and carboxylate compound.

### [Positive electrode plate]

The positive electrode plate includes a positive electrode current collector and a positive electrode active substance layer provided on at least one surface of the positive electrode current collector, where the positive electrode active substance layer includes a positive electrode active material and a conductive agent.

In an example, the positive electrode current collector includes two opposite surfaces in its thickness direction, and the positive electrode active substance layer is provided on either or both of the two opposite surfaces of the positive electrode current collector.

In the lithium-ion secondary battery of this application, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (for example, aluminum, aluminum alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

The positive electrode active substance layer provided on the surface of the positive electrode current collector includes a positive electrode active material. The positive electrode active material used in this application may be any conventional positive electrode active material used in secondary batteries. In some embodiments, the positive electrode active material may include one or more selected from lithium transition metal oxide, olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available. The surface of the positive electrode active material may be coated with carbon.

The positive electrode active material layer optionally includes a conductive agent. The conductive agent is not limited to a specific type, and may be selected by persons skilled in the art based on actual needs. In an example, the conductive agent used in the positive electrode material may be selected from one or more of superconducting carbon, acetylene black, carbon black, Ketjen black, carbon dots, carbon nanotubes, graphene, and carbon nanofiber.

The positive electrode active substance layer further optionally includes a binder. In an example, the binder may be one or more of styrene-butadiene rubber (SBR), water-based acrylic resin, polyvinylidene fluoride (PVDF), polytetrafluoroethylene (PTFE), ethylene vinyl acetate (EVA), polyacrylic acid (PAA), carboxymethyl cellulose (CMC), polyvinyl alcohol (PVA), and polyvinyl butyral (PVB).

The positive electrode plate in this application may be prepared by using the method known in the art. In an example, a carbon-coated positive electrode active material, a conductive agent, and a binder may be dispersed in a solvent (for example, N-methylpyrrolidone (NMP)) to form a uniform positive electrode slurry. The positive electrode slurry is applied on a positive electrode current collector, followed by processes such as drying and cold pressing to obtain a positive electrode plate.

### [Negative electrode plate]

The negative electrode plate includes a negative electrode current collector and a negative electrode material layer disposed on at least one surface of the negative electrode current collector, and the negative electrode material layer includes a negative electrode active substance.

For example, the negative electrode current collector includes two opposite surfaces in its thickness direction, and the negative electrode material layer is disposed on either or both of the two opposite surfaces of the negative electrode current collector.

In the lithium-ion secondary battery of this application, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (for example, copper, copper alloy, nickel, nickel alloy, titanium, titanium alloy, silver, silver alloy, or the like) on a polymer material matrix (for example, a matrix of polypropylene (PP), polyethylene terephthalate (PET), polybutylene terephthalate (PBT), polystyrene (PS), or polyethylene (PE)).

In the lithium-ion secondary battery of this application, the negative electrode material layer typically includes a negative electrode active substance, an optional binder, an optional conductive agent, and other optional additives, and is usually formed by being coated with a negative electrode slurry and dried. The negative electrode slurry is usually obtained by dispersing the negative electrode active substance and the optional conductive agent, binder, and the like in a solvent and stirring them to a uniform mixture. The solvent may be N-methylpyrrolidone (NMP) or deionized water.

A specific type of the negative electrode active substance is not limited. An active substance known in the art that can be used for negative electrodes of lithium-ion secondary batteries may be used, and persons skilled in the art may select an active substance based on actual needs. In an example, the negative electrode active substance may be selected from one or more of graphite, soft carbon, hard carbon, meso-carbon microbeads, carbon fiber, carbon nanotubes, elemental silicon, silicon-oxygen compound, silicon-carbon composite, and lithium titanate.

In an example, the conductive agent may be selected from one or more of superconducting carbon, acetylene black, carbon black, Ketjen black, carbon dots, carbon nanotubes, graphene, and carbon nanofiber.

In an example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

The other optional additives are, for example, thickeners (for example, sodium carboxymethyl cellulose (CMC-Na)).

### [Separator]

Lithium-ion secondary batteries using an electrolyte further include a separator. The separator is disposed between the positive electrode plate and the negative electrode plate to provide separation. The separator is not limited to any particular type in this application, and may be any well-known porous separator with good chemical stability and mechanical stability. In some embodiments, a material of the separator may be selected from one or more of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft package may be plastic, which, for example, may be polypropylene (PP), polybutylene terephthalate (PBT), and polybutylene succinate (PBS).

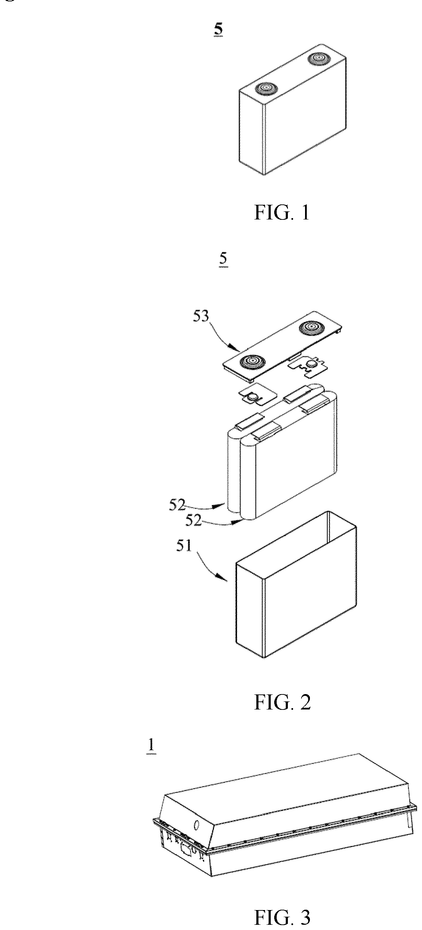

The secondary battery is not limited to a particular shape in this application, and may be cylindrical, rectangular, or of any other shapes. For example, FIG. 1 shows a lithium-ion secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The lithium-ion secondary battery 5 may include one or more electrode assemblies 52, and persons skilled in the art may make choices according to actual requirements.

In some embodiments, the lithium-ion secondary battery may be assembled into a battery module 4, and the battery module 4 may include one or more lithium-ion secondary batteries. The specific quantity may be chosen by persons skilled in the art according to the application and capacity of the battery module 4. In the battery module 4, a plurality of lithium-ion secondary batteries 5 may be sequentially arranged in a length direction of the battery module. Certainly, the batteries may alternatively be arranged in any other manners. Further, the plurality of lithium-ion secondary batteries 5 may be fixed by using fasteners. Optionally, the battery module 4 may further include a housing with an accommodating space, and the plurality of lithium-ion secondary batteries 5 are accommodated in the accommodating space.

In some embodiments, the above lithium-ion secondary batteries 5 or battery modules 4 may be assembled into a battery pack 1, and the quantity of lithium-ion secondary batteries 5 or battery modules 4 included in the battery pack 1 may be selected by persons skilled in the art based on the application and capacity of the battery pack 1.

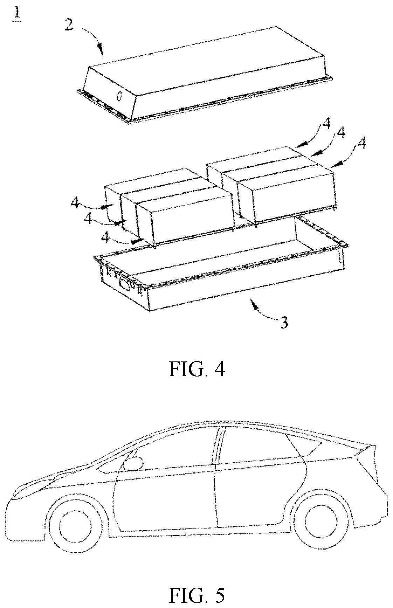

FIG. 3 and FIG. 4 show a battery pack 1 as an example. Referring to FIG. 3 and FIG. 4, the battery pack 1 may include a battery box and a plurality of battery cells arranged in the battery box. The battery box includes an upper box body 2 and a lower box body 3. The upper box body 2 can cover the lower box body 3 to form an enclosed space for accommodating the battery cells.

In addition, this application further provides an apparatus. The apparatus includes the battery pack provided in this application. The battery pack may be used as a power source of the apparatus, or an energy storage unit of the apparatus. The apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

For the apparatus, a battery pack may be selected according to requirements for using the apparatus.

FIG. 5 shows an apparatus as an example. The apparatus is a battery electric vehicle, a hybrid electric vehicle, a plug-in hybrid electric vehicle, or the like. To meet requirements of the apparatus for high power and high energy density of lithium-ion secondary batteries, a battery pack or a battery module may be used.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. If not specially indicated, all concentration ratios are weight ratios and all experiments are performed at room temperature and atmospheric pressure.

In Examples 1 to 16 and Comparative Examples 1 and 2, the secondary batteries were prepared according to the following method.

### (1) Preparation of positive electrode plate

Li positive electrode: A positive electrode active material LiNi_{0.8}Co_{0.1}Mn_{0.1}O₂ (NCM811), a conductive agent acetylene black, and a binder polyvinylidene fluoride (PVDF) were dissolved in a solvent N-methylpyrrolidone (NMP) at a weight ratio of 90:5:5 and fully stirred into a uniform mixture to produce a positive electrode slurry, and then the positive electrode slurry was evenly applied onto a positive electrode current collector, followed by drying, cold pressing, and cutting to produce a positive electrode plate.

Na positive electrode: A positive electrode active material sodium oxide Na₂FeO₂, a conductive agent acetylene black, and a binder polyvinylidene fluoride (PVDF) were dissolved in a solvent N-methylpyrrolidone (NMP) at a weight ratio of 90:5:5 and fully stirred into a uniform mixture to produce a positive electrode slurry, and then the positive electrode slurry was evenly applied onto a positive electrode current collector, followed by drying, cold pressing, and cutting to produce a positive electrode plate.

### (2) Preparation of negative electrode plate

C negative electrode: An active material artificial graphite, a conductive agent acetylene black, a binder styrene-butadiene rubber (SBR), and a thickener sodium carboxymethyl cellulose (CMC) were dissolved in a solvent deionized water at a weight ratio of 90:4:4:2, and mixed well with solvent deionized water to produce a negative electrode slurry. The negative electrode slurry was evenly applied onto a negative electrode current collector copper foil one or multiple times, followed by drying to obtain a negative electrode membrane. Then cold pressing and cutting were performed to produce a negative electrode plate.

### (3) Preparation of electrolyte

Electrolyte E0: In an argon atmosphere glove box (H₂O < 0.1 ppm, Oz < 0.1 ppm), the organic solvents EC/EMC were mixed well at a volume ratio of 3/7. Then, 12.5% LiPF₆ lithium salt was added and dissolved in the organic solvents, and the mixture was stirred to uniformity to obtain the corresponding electrolyte.
Electrolyte E1: In an argon atmosphere glove box (H₂O < 0.1 ppm, Oz < 0.1 ppm), the organic solvents EC/EMC were mixed well at a volume ratio of 3/7. Then, 12.5% LiPF₆ lithium salt was added and dissolved in the organic solvents, 1% 1,4,6,9-tetraoxa-5-silicaspiro[4.4]nonane was added as an additive, and the mixture was stirred to uniformity to obtain the corresponding electrolyte.
Electrolyte E2: In an argon atmosphere glove box (H₂O < 0.1 ppm, Oz < 0.1 ppm), the organic solvents EC/EMC were mixed well at a volume ratio of 3/7. Then, 12.5% LiPF₆ lithium salt was added and dissolved in the organic solvents, 2% 1,3-Dioxy-2,2-diol-2-sila-pentane was added as an additive, and the mixture was stirred to uniformity to obtain the corresponding electrolyte.
Electrolyte E3: In an argon atmosphere glove box (H₂O < 0.1 ppm, Oz < 0.1 ppm), the organic solvents EC/EMC were mixed well at a volume ratio of 3/7. Then, 12.5% LiPF₆ lithium salt was added and dissolved in the organic solvents, 8% vinylidene silicate was added as an additive, and the mixture was stirred to uniformity to obtain the corresponding electrolyte.
Electrolyte E4: In an argon atmosphere glove box (H₂O < 0.1 ppm, Oz < 0.1 ppm), the organic solvents vinyl silicate/ethyl methyl carbonate were mixed well at a volume ratio of 3/7. Then, 12.5% LiPF₆ lithium salt was added and dissolved in the organic solvents, and the mixture was stirred to uniformity to obtain the corresponding electrolyte.
Electrolyte E5: In an argon atmosphere glove box (H₂O < 0.1 ppm, Oz < 0.1 ppm), the organic solvents ethylene carbonate/methyl ethyl silicate were mixed well at a volume ratio of 3/7. Then, 12.5% LiPF₆ lithium salt was added and dissolved in the organic solvents, and the mixture was stirred to uniformity to obtain the corresponding electrolyte.
Electrolyte E6: In an argon atmosphere glove box (H₂O < 0.1 ppm, Oz < 0.1 ppm), the organic solvents vinyl silicate/methyl ethyl silicate were mixed well at a volume ratio of 3/7. Then, 12.5% LiPF6 lithium salt was added and dissolved in the organic solvents, and the mixture was stirred to uniformity to obtain the corresponding electrolyte.
Electrolyte E7: In an argon atmosphere glove box (H₂O < 0.1 ppm, Oz < 0.1 ppm), the organic solvents EC/EMC were mixed well at a volume ratio of 3/7. Then, 12.5% LiPF₆ lithium salt was added and dissolved in the organic solvents, 1% tetraethyl silicate was added as an additive, and the mixture was stirred to uniformity to obtain the corresponding electrolyte.
Electrolyte E8: In an argon atmosphere glove box (H₂O < 0.1 ppm, Oz < 0.1 ppm), the organic solvents EC/EMC were mixed well at a volume ratio of 3/7. Then, 12.5% LiPF₆ lithium salt was added and dissolved in the organic solvents, 1% pentenyl silicate was added as an additive, and the mixture was stirred to uniformity to obtain the corresponding electrolyte.

### (4) Preparation of secondary battery

A PE porous film was coated with a 2-µm-thick ceramic coating and then used as the separator. The positive electrode plate, the separator, and the negative electrode plate were sequentially stacked so that the separator was located between the positive and negative electrode plates to provide separation. Then the resulting stack was wound to obtain an electrode assembly. The electrode assembly was placed into a battery housing and dried. Then electrolyte was injected, and processes such as formation and standing were performed to obtain a secondary battery.

**Table 1 Composition of secondary batteries of Comparative Examples 1 to 2 and Examples 1 to 16**

| No. | Positive electrode | Negative electrode | Electrolyte |
|---|---|---|---|
| Comparative Example 1 | Li positive electrode | C negative electrode | Electrolyte E0 |
| Comparative Example 2 | Na positive electrode | C negative electrode | Electrolyte E0 |
| Example 1 | Li positive electrode | C negative electrode | Electrolyte E1 |
| Example 2 | Li positive electrode | C negative electrode | Electrolyte E2 |
| Example 3 | Li positive electrode | C negative electrode | Electrolyte E3 |
| Example 4 | Li positive electrode | C negative electrode | Electrolyte E4 |
| Example 5 | Li positive electrode | C negative electrode | Electrolyte E5 |
| Example 6 | Li positive electrode | C negative electrode | Electrolyte E6 |
| Example 7 | Li positive electrode | C negative electrode | Electrolyte E7 |
| Example 8 | Li positive electrode | C negative electrode | Electrolyte E8 |
| Example 9 | Na positive electrode | C negative electrode | Electrolyte E1 |
| Example 10 | Na positive electrode | C negative electrode | Electrolyte E2 |
| Example 11 | Na positive electrode | C negative electrode | Electrolyte E3 |
| Example 12 | Na positive electrode | C negative electrode | Electrolyte E4 |
| Example 13 | Na positive electrode | C negative electrode | Electrolyte E5 |
| Example 14 | Na positive electrode | C negative electrode | Electrolyte E6 |
| Example 15 | Na positive electrode | C negative electrode | Electrolyte E7 |
| Example 16 | Na positive electrode | C negative electrode | Electrolyte E8 |

The following is the test procedure of relevant parameters.

### 1. Internal resistance (mΩ) of cell

At 25°C, the produced secondary battery and the secondary battery cycled at 45°C for 1,000 cycles were charged to 4.3 V at a constant current of 1C, charged to a current less than 0.05C at a constant voltage of 4.3 V, and then discharged at 1C for 30 minutes, so that the cell was adjusted to 50% SOC. Then, the positive and negative probes of the TH2523A AC internal resistance tester were used to touch the positive and negative electrodes of the batteries, respectively. The internal resistance values of the batteries were read through the internal resistance tester, and recorded as the initial internal resistance of the cell and the internal resistance of the cell after 800 cycles, respectively.

### 2. Capacity retention rate after 1,000 cycles at 45°C

At 45°C, the secondary battery was charged to 4.3 V at a constant current of 1C, charged to a current less than 0.05C at a constant voltage of 4.3 V, and then the lithium-ion battery was discharged to 3.0 V at a constant current of 1C, which was one charge and discharge cycle. The charge and discharge cycle was repeated and the capacity retention rate of the secondary battery after 800 cycles was calculated.

Capacity retention rate (%) of the secondary battery after 1,000 cycles at 45 °C = (discharge capacity at the 1,000th cycle/discharge capacity at the first cycle) x 100%.

### 3. Capacity retention rate after storage at 60°C for 300 days

At 25°C, the secondary battery was charged to a voltage of 4.3 V at a constant current of 1C, charged to a current of 0.05C at a constant voltage of 4.3 V, and then discharged to 3.0 V at a constant current of 1C, which was one charge and discharge cycle. Lithium testing was performed at this time. The fully charged secondary battery was placed in a thermostat at a temperature of 60°C and the capacity was tested after 300 days of storage.

Capacity retention rate (%) of the secondary battery after 300 days of storage at 60°C = (discharge capacity after 300 days of storage/discharge capacity at the first cycle) x 100%.

**Table 2 Cycling test results of lithium-ion secondary batteries of Comparative Example 1 and Examples 1 to 8**

| No. | Initial internal resistance of cell (mΩ) | Internal resistance of cell after 1,000 cycles (mΩ) | Capacity retention rate after 1,000 cycles at 45°C (%) | Capacity retention rate after storage at 60°C for 300 days (%) |
|---|---|---|---|---|
| Comparative Example 1 | 870 | 1049 | 28 | 26 |
| Example 1 | 851 | 1001 | 35 | 32 |
| Example 2 | 842 | 986 | 43 | 38 |
| Example 3 | 825 | 971 | 51 | 46 |
| Example 4 | 813 | 953 | 62 | 53 |
| Example 5 | 791 | 931 | 64 | 59 |
| Example 6 | 760 | 909 | 69 | 61 |
| Example 7 | 861 | 1021 | 32 | 28 |
| Example 8 | 865 | 1031 | 30 | 27 |

In Comparative Example 1, conventional electrolyte was used in the lithium battery, the impedance before and after cycling was large and the capacity retention rate deteriorated severely during cycling.

In the lithium-ion secondary batteries of Examples 1 to 6, the silicate ester defined in this application was introduced into the electrolyte as an additive, a co-solvent, or a solvent. Results show that the introduction of the silicate ester of the specific structure is beneficial in reducing the impedance deterioration during cycling and improving the interface stability. The results of capacity retention rate during cycling also show that the silicate ester of the specific structure can substantially improve the cycling stability and capacity performance of the batteries.

In the lithium batteries of Examples 7 and 8, other silicate esters not of this application were introduced as additives in the electrolyte. It can be found that Examples 7 and 8 have only a marginal improvement in impedance reduction and cycling stability enhancement for the batteries when compared with Comparative Example 1. However, as compared to Examples 1 to 6 where the silicate ester with a specific structure as defined in this application was used, the improvement effect of Examples 7 and 8 was much smaller.

**Table 3 Cycling test results of sodium-ion secondary batteries of Comparative Example 2 and Examples 9 to 16**

| No. | Initial internal resistance of cell (mΩ) | Internal resistance of cell after 1,000 cycles (mΩ) | Capacity retention rate after 1,000 cycles at 45°C (%) | Capacity retention rate after storage at 60°C for 300 days (%) |
|---|---|---|---|---|
| Comparative Example 2 | 920 | 1106 | 20 | 10 |
| Example 9 | 901 | 1058 | 27 | 16 |
| Example 10 | 892 | 1043 | 35 | 22 |
| Example 11 | 875 | 1028 | 43 | 30 |
| Example 12 | 863 | 1010 | 54 | 37 |
| Example 13 | 841 | 988 | 56 | 43 |
| Example 14 | 810 | 966 | 61 | 45 |
| Example 15 | 911 | 1078 | 24 | 12 |
| Example 16 | 915 | 1088 | 22 | 11 |

In Comparative Example 2, conventional electrolyte was used in the sodium battery, the impedance before and after cycling was large and the capacity retention rate deteriorated severely during cycling.

In the sodium-ion secondary batteries of Examples 9 to 14, silicate ester was introduced into the electrolyte as an additive, a co-solvent, or a solvent. Results show that the introduction of the silicate ester of a specific structure in this application is beneficial in reducing the impedance deterioration during cycling and improving the interface stability. The results of capacity retention rate during cycling also show that the silicate ester has a significant improvement on the cycling stability and capacity performance of the cells, with results similar to the improvement for lithium-ion secondary batteries observed in Examples 1 to 6.

In the sodium batteries of Examples 15 and 16, other silicate esters not of this application were introduced as additives in the electrolyte. It can be found that Examples 15 and 16 have only a marginal improvement in impedance reduction and cycling stability enhancement for the cells when compared with Comparative Example 2. As compared to Examples 9 to 14 where the silicate ester with a specific structure as defined in this application was used, the improvement in Examples 15 to 16 is quite small.

Although this application has been described with reference to the embodiments, various modifications can be made to this application without departing from the scope of this application and the components therein can be replaced with their equivalents. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A secondary battery, comprising a silicate ester and/or a derivative thereof, the silicate ester and/or the derivative thereof comprising a 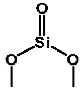 structure in a cyclic or non-cyclic structure or a 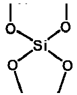 structure in a cyclic structure.

2. The secondary battery according to claim 1, wherein the silicate ester and/or the derivative thereof are contained in an electrolyte of the secondary battery.

3. The secondary battery according to claim 1 or 2, wherein when the silicate ester and/or the derivative thereof is of a cyclic structure, the ring is a 3- to 6-membered ring.

4. The secondary battery according to any one of claims 1 to 3, wherein the silicate ester has structures shown in the following formula 1 to formula 15: 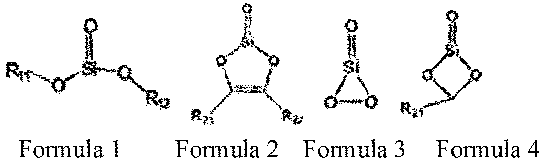 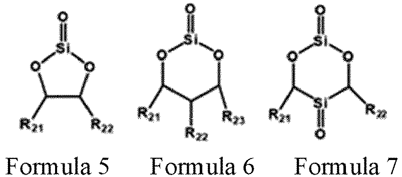 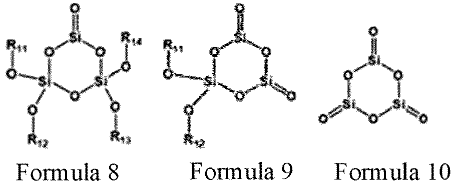 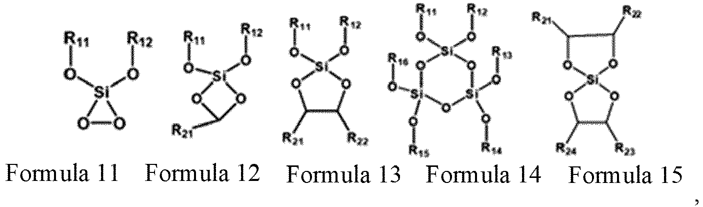
wherein R₁₁ to R₁₆ and R₂₁ to R₂₄ are each independently selected from H, halogen, substituted or unsubstituted C₁-C₁₀ alkyl group, substituted or unsubstituted C₂-C₁₀ alkenyl group, substituted or unsubstituted C₂-C₁₀ alkynyl group, substituted or unsubstituted C₆-C₁₄ aryl group, carbonyl group, carboxyl group, ester group, nitrile group, and ether group, wherein in a case of substitution, the substituent group is selected from halogen, or
two groups of R₁₁ to R₁₆ and R₂₁ to R₂₄ form a 4- to 6-membered heterocyclic ring together with groups to which the two groups are attached,
or the silicate ester derivative is derived from a silicate ester having the structures shown in formula 1 to formula 15.

5. The secondary battery according to claim 4, wherein the silicate ester has a structure selected from one or more of formula 1, formula 2, formula 5, formula 13, and formula 15.

6. The secondary battery according to claim 4 or 5, wherein R₁₁ to R₁₆ and R₂₁ to R₂₄ are each independently selected from H and C₁-C₆ alkyl group.

7. The secondary battery according to any one of claims 4 to 6, wherein
the silicate ester has the structure of formula 1, wherein R₁₁ is methyl group and R₁₂ is ethyl group; or
the silicate ester has the structure of formula 2, wherein R₂₁ and R₂₂ are both H; or
the silicate ester has the structure of formula 5, wherein R₂₁ and R₂₂ are both H; or
the silicate ester has the structure of formula 13, wherein R₁₁, R₁₂, R₂₁ and R₂₂ are all H; or
the silicate ester has the structure of formula 15, wherein R₂₁ to R₂₄ are all H.

8. The secondary battery according to any one of claims 2 to 7, wherein the silicate ester is used as a solvent, a co-solvent, and/or an additive in the electrolyte.

9. The secondary battery according to any one of claims 2 to 8, wherein a proportion of the silicate ester and/or the derivative thereof in the electrolyte is 0.001wt% to 90wt%.

10. The secondary battery according to any one of claims 1 to 9, wherein a positive electrode active material of the secondary battery is selected from one or more of lithium iron phosphate, lithium manganese iron phosphate, lithium cobalt oxide, lithium nickel oxide, lithium manganese oxide, lithium nickel manganese oxide, lithium nickel cobalt manganese oxide, lithium nickel cobalt aluminum oxide, lithium-rich material, sodium-oxide compound, potassium-oxide compound, and compounds obtained by adding other transition metals or non-transition metals to the foregoing compounds.

11. The secondary battery according to any one of claims 1 to 10, wherein a negative electrode active material of the secondary battery is selected from one or more of graphite, soft carbon, hard carbon, meso-carbon microbeads, carbon fiber, carbon nanotubes, elemental silicon, silicon-oxygen compound, silicon-carbon composite, lithium titanate, lithium metal, sodium metal, potassium metal, and compounds obtained by adding other transition metals or non-transition metals to the foregoing materials.

12. The secondary battery according to any one of claims 1 to 11, further comprising an organic solvent selected from one or more of linear carbonate, cyclic carbonate, carboxylic acid ester, and ether.

13. The secondary battery according to claim 12, wherein the organic solvent comprises one or more of diethyl carbonate, dipropyl carbonate, ethyl methyl carbonate, methyl propyl carbonate, ethyl propyl carbonate, ethylene carbonate, propylene carbonate, butylene carbonate, gamma-butyrolactone, methyl formate, ethyl acetate, propyl acetate, methyl propionate, ethyl propionate, tetrahydrofuran, dimethyl ether, diethyl ether, and ethylene glycol dimethyl ether.

14. The secondary battery according to any one of claims 1 to 13, further comprising an electrolyte additive selected from one or more of unsaturated bond-containing cyclic carbonate compound, halogen-substituted cyclic carbonate compound, sulfate compound, sulfite compound, sultone compound, disulfonic acid compound, nitrile compound, aromatic compound, isocyanate compound, phosphonitrile compound, cyclic anhydride compound, phosphite compound, phosphate compound, borate compound, and carboxylate compound.

15. The secondary battery according to any one of claims 1 to 14, further comprising an electrolytic salt selected from one or more of LiPF₆, LiBF₄, LiBOB, LiAsF₆, Li(FSOz)zN, LiCF₃SO₃, and LiClO₄.

16. The secondary battery according to any one of claims 1 to 15, wherein the secondary battery comprises a lithium silicate having a gel-like structure.

17. A battery pack, comprising the secondary battery according to any one of claims 1 to 16.

18. An electric apparatus, comprising the secondary battery according to any one of claims 1 to 16 or the battery pack according to claim 17.
